# EUROPÄISCHE PATENTSCHRIFT

(11) **EP 3 149 291 B1**
(45) Veröffentlichungstag und Bekanntmachung des Hinweises auf die Patenterteilung: **30.11.2022**
(21) Anmeldenummer: 15725504.3
(22) Anmeldetag: 22.04.2015
(51) Int. Cl.: F01L 1/047

(54) **NOCKENWELLE MIT VERSCHLUSSDECKEL**
CAMSHAFT HAVING A CLOSING COVER
ARBRE À CAMES À COUVERCLE DE FERMETURE

(30) Priorität: 26.05.2014 DE 102014007591
(43) Veröffentlichungstag der Anmeldung: 05.04.2017
(73) Patentinhaber: thyssenkrupp Dynamic Components TecCenter AG, 9492 Eschen (LI); thyssenkrupp AG, 45143 Essen (DE)
(72) Erfinder: BECK, Monika, 88239 Wangen (DE); BOLD, Michael, 9475 Sevelen (CH); ALEY, Reiner, 38871 Ilsenburg (DE); ILGEROTH, Mario, 06502 Thale (DE)
(74) Vertreter: thyssenkrupp Intellectual Property GmbH
(86) Internationale Anmeldenummer: PCT/EP2015/058681
(87) Internationale Veröffentlichungsnummer: WO 2015/180897

(56) Entgegenhaltungen:
- EP-A1- 1 505 267
- WO-A1-91/19887
- DE-A1- 10 000 916
- DE-A1-102006 036 850
- DE-A1-102007 019 923
- JP-A- 2002 047 906

## Beschreibung

Die Erfindung betrifft eine Nockenwelle gemäß dem Oberbegriff des Anspruchs 1, sowie ein Montageverfahren für eine Nockenwelle gemäß dem Oberbegriff des Anspruchs 16 und 19. Nockenwellen können mit Radialbohrungen versehen sein, durch die Öl geleitet werden kann. Ein eingebauter Verschlussdeckel im Inneren der Nockenwelle sorgt dafür, dass kein Öl in ungewünschte Bereiche eindringt. Bei einem Vorhandensein eines Verschlussdeckels ist es wichtig, dass dieser während des Betriebs der Nockenwelle nicht verrutscht. Durch ein Verrutschen würden zum einen die Öldruckverhältnisse innerhalb der Nockenwelle verändert und zum anderen könnten Versorgungsbohrungen zugesetzt oder von der Ölversorgung abgeschnitten werden.

Aus der DE 100 00 916 A1 und der DE 10 2006 036 850 A1 sind hohlzylindrische Nockenwellen mit einem eingebauten Verschlussdeckel bekannt. Eine Nockenwelle, umfassend eine Hohlwelle, mindestens einen Nocken und einen im Inneren der Hohlwelle und in axialer Richtung beabstandet zu dem Nocken angeordneten Verschlussdeckel, wobei die Nockenwelle eine oder mehrere Einbuchtungen umfasst, ist bereits aus der DE 10 2007 019923 A1 bekannt geworden. Auch bei dieser Nockenwelle besteht die Gefahr, dass die Verschlussdeckel verrutschen und die oben skizzierten Nachteile auftreten können.

WO 91/19887 beschreibt eine Vorrichtung zur Verteilung von Öl, die gezielte Führung mehrerer Ölströme innerhalb einer Nockenwelle ermöglicht. Die Ölströme sind dabei völlig voneinander getrennt und können daher unterschiedliche Drücke, Massenströme, Strömungsrichtungen aufweisen. Dazu ist innerhalb der Nockenwelle ein sich axial erstreckender Einsatz vorgesehen.

Aufgabe der vorliegenden Erfindung ist es, eine Nockenwelle, bestehend aus einer Hohlwelle, ohne großen technischen Aufwand und möglichst flexibel derart zu modifizieren, dass ein Verrutschen eines eingebauten Verschlussdeckels verhindert wird.

Die Aufgabe wird durch die kennzeichnenden Merkmale des Anspruchs 1 gelöst. Dabei ist die axiale Ausdehnung der einen oder mehreren Haltemittel kleiner oder gleich dem axialen Abstand zwischen einem dem Nocken zugewandten Ende des Verschlussdeckels und dem Nocken.

In einer Ausführung der Erfindung handelt es sich bei der einen oder den mehreren Einbuchtungen um, ins Innere der Hohlwelle hineinragende, mit einem Verbundmittel fest montierte Haltemittel. Bei den Haltemitteln kann es sich um einen oder mehrere durch Bohrungen von außen durch die Außenwand der Nockenwelle eingebrachte Haltemittel, die in den Innenraum der Hohlwelle hineinragen, oder um einen oder mehrere von innen in die Nockenwelle montierte Haltemittel handeln. Die Haltemittel werden in der Nockenwelle mittels eines Verbundmittels befestigt. An dieser Stelle ist der Begriff Verbundmittel als breit definiert zu erachten. Bei dem Verbundmittel kann es sich beispielsweise um ein Verschweißen, aber genauso um ein Verschrauben, Verkleben oder Einpressen handeln. Durch das Einbringen von Haltemitteln von innen oder außen in der Nockenwelle, die in das Innere der Hohlwelle hineinragen, kann der Verschlussdeckel am Verrutschen gehindert werden, ohne dass die äußere Form der Nockenwelle diesbezüglich verändert wird.

In einer Ausführung der Erfindung können die eine oder mehreren Einbuchtungen rotationssymmetrisch sein, oder symmetrisch oder asymmetrisch angeordnet sein. Dabei ist eine rotationssymmetrische Anordnung besonders Vorteilhaft, da diese das Rotationsverhalten der Nockenwelle nicht beeinträchtigt.

Bevorzugt wird die Erfindung dadurch weitergebildet, indem eine Nockenwelle, die eine Hohlwelle , mindestens einen Nocken und einen im Inneren der Hohlwelle und in axialer Richtung beabstandet zu dem Nocken angeordneten Verschlussdeckel umfasst, mit einer oder mehreren Einbuchtungen versehen wird, um ein Verrutschen des Verschlussdeckels in mindestens eine axiale Richtung zu verhindern. Dabei ist die axiale Ausdehnung der einen oder mehreren Einbuchtungen kleiner oder gleich dem axialen Abstand zwischen einem dem Nocken zugewandten Ende des Verschlussdeckels und dem Nocken. Bei den Einbuchtungen kann es sich sowohl um von außen bewirkte lokale Verformungen der Hohlwelle, als auch um von außen oder innen in die Hohlwelle montierte Haltemittel handeln, die in den Innenraum der Hohlwelle hineinragen und somit den Querschnitt der Hohlwelle an der entsprechenden Stelle lokal verengen.

Die eine oder mehreren Einbuchtungen haben den Vorteil, dass sie auch erst im Montageprozess in das Nockenwellenrohr eingebracht werden können.

Die Nockenwelle, umfassend eine Hohlwelle, weist eine oder mehrere Versorgungsöffnungen auf, um Lager und anliegende Vorrichtungen, wie beispielsweise einen Bremskraftverstärker oder einen Phaser, mit Öl zu versorgen. Durch das Einbringen einer oder mehrerer Einbuchtungen in der Nockenwelle wird sichergestellt, dass die in der Nockenwelle eingebrachten Versorgungsöffnungen während des Betriebs durch Torsion, Öldruck, oder umlaufende Biegung der Nockenwelle nicht durch Verrutschen des Verschlussdeckels verschlossen werden können. Des Weiteren wird durch das Hindern eines Verrutschens des Verschlussdeckels der Öldruck innerhalb der Nockenwelle konstant gehalten.

In einer Ausführung der Erfindung sind die ein oder mehreren in das Innere der Nockenwelle ragende Einbuchtungen in einer oder mehreren zur Axialrichtung der Nockenwelle orthogonalen Ebenen beliebig angeordnet, wobei mindestens eine Einbuchtung so angebracht ist, dass der Verschlussdeckel nicht auf die nächstgelegene Versorgungsöffnung rutschen kann, damit eine Ölversorgung durch die Versorgungsöffnungen gewährleistet ist. Die eine oder mehreren Einbuchtungen können in axialer Richtung der Nockenwelle zwischen dem Verschlussdeckel und der dem Verschlussdeckel am nächsten liegenden Versorgungsbohrung angeordnet sein oder an selber axialer Positionierung wie die dem Verschlussdeckel am nächsten liegenden Versorgungsbohrung angebracht sein. Die eine oder die mehreren Einbuchtungen können sich aber auch in axialer Richtung der Nockenwelle vom Ende des Verschlussdeckels bis über die dem Verschlussdeckel am nächsten liegenden Versorgungsbohrung erstrecken bzw. sich in axialer Richtung der Nockenwelle vom Ende des Verschlussdeckels bis zur axialen Position der nächstgelegenen Nocke über den dazwischen liegenden Innenraum der Nockenwelle, in dem sich die eine oder mehreren Versorgungsbohrungen befinden, erstrecken. Die Position der Einbuchtungen kann je nach Bedarf und gewünschtem Rotationsverhalten der Nockenwelle entsprechend gewählt werden. Besonders vorteilhaft ist eine die Hohlwelle radial umlaufende Einbuchtung an selber axialer Position wie die einer Versorgungsbohrung, sodass sich die Versorgungsbohrung innerhalb der umlaufenden Einbuchtung befindet. Auf diese Weise bildet die umlaufende Einbuchtung einen Ölübergabering bzw. eine Ölnut, durch die eine gute Ölversorgung bzw. Ölübergabe gewährleistet werden kann.

Um den Verschlussdeckel im Inneren der Nockenwelle am Verrutschen zu hindern, kann dieser aber auch eingekeilt werden, indem sich in axialer Richtung der Nockenwelle auf beiden Seiten des Verschlussdeckels jeweils eine oder mehrere Einbuchtungen befinden. Auf diese Weise kann sich der Verschlussdeckel in keine Richtung innerhalb der Nockenwelle bewegen, wodurch verhindert wird, dass ein Verrutschen des Verschlussdeckels die Größe des vom Verschlussdeckel begrenzten Hohlraumes und damit den Öldruck innerhalb der Nockenwelle beeinflusst.

In einer bevorzugten Ausführung der Erfindung handelt es sich bei der einen oder den mehreren Einbuchtungen um von außen in die Nockenwelle eingeprägte Einwalzungen, mittels eines Stempels eingebrachte plastische Einformungen, Eindrückungen oder Einkerbungen. Von außen in die Nockenwelle eingebrachte Einbuchtungen haben den entscheidenden Vorteil, dass bei dem Verfahren zum Einbringen der Einbuchtungen keine Verschmutzung in die Hohlwelle und somit nicht in den Ölkreislauf gelangt. Vorzugsweise handelt es sich bei den Einbuchtungen um die Hohlwelle radial umlaufende Einwalzungen. Solche Einwalzungen haben den besonderen Vorteil, dass wenn sie an einer axialen Position, an der sich auch eine Versorgungsbohrung befindet, eine gute Ölübergabe gewährleistet werden kann. Des Weiteren sind Einwalzungen einfach zu realisieren, da es zum Einwalzen keiner aufwendigen Werkzeuge bedarf.

Die erfindungsgemäße Aufgabe wird ebenfalls gelöst durch ein Montageverfahren für eine Nockenwelle, umfassend eine Hohlwelle und einem im Inneren der Hohlwelle angeordneten Verschlussdeckel, bei dem eine oder mehrere Einbuchtungen in die Nockenwelle eingebracht werden, nachdem der Verschlussdeckel in die Nockenwelle eingeführt wurde. Mit diesem Verfahren ist es möglich Versorgungsöffnungen, Verschlussdeckel und zugehörige Einbuchtungen, die das Verrutschen des einen oder mehreren Verschlussdeckel an ungewünschte Positionen verhindern, flexibel in die Nockenwelle einzubauen. Die Einbuchtungen können, zusammen mit dem Einbringen des Verschlussdeckels, in der Bearbeitung der Hohlwelle hergestellt werden, oder in der Nockenwellenmontage. Außer einem Verschlussdeckel können auch andere Komponenten, die sich in der Hohlwelle befinden, mittels dieses Montageverfahrens arretiert werden.

In einer Ausführung des Montageverfahrens haben die eine oder die mehreren Einbuchtungen nach dem Einbringen in die Nockenwelle eine definierte minimale Ausdehnung in radialer und axialer Richtung und können in beide Richtungen nachträglich erweitert werden. Die Breite und Tiefe der Einbuchtungen lässt sich je nach Bedarf nachträglich erweitern.

Bei einem Montageverfahren für eine Nockenwelle, umfassend eine Hohlwelle und einem im Inneren der Hohlwelle angeordneten Verschlussdeckel, werden eine oder mehrere Einbuchtungen von außen in die Nockenwelle eingewalzt, mittels Stempel eingeformt, eingekerbt oder eingedrückt, um ein Verrutschen des Verschlussdeckels in mindestens eine axiale Richtung zu verhindern. Das Einbringen von Einbuchtungen von außen in die Nockenwelle, wie beispielsweise eine umlaufende Nut, bringt keine Verschmutzung in die Hohlwelle und somit nicht in den Ölkreislauf.

In einer Ausführung des Montageverfahrens werden die eine oder die mehreren Einbuchtungen von außen in die Nockenwelle rotationssymmetrisch eingebracht. Durch die Rotationssymmetrie der Einwalzung, plastischen Verformung, die mittels eines Stempels eingebracht wird, Einkerbung oder Eindrückung, bleiben die Rotationseigenschaften der Nockenwelle erhalten. Bei dem Montageverfahren wird anstelle einer einseitig in die Hohlwelle eingedrückten Einbuchtung eine sich über zumindest einen Teil des Nockenwellenumfangs, vorzugsweise vollständig umlaufend erstreckende Einschnürung eingebracht. Bei einer vollständig umlaufenden Einschnürung der Hohlwelle kann bei dem Montageverfahren ein Dreirollen-Walzapparat mit um 120° versetzten Rollen, die entweder angetrieben oder nicht angetrieben sein können, zum Einsatz kommen. Dabei rotiert entweder der Walzkopf um die Hohlwelle oder die Hohlwelle rotiert um ihre zentrale Achse, während die Walzen feststehen. Die Walzen sind radial anstellbar, sodass eine bestimmte Kontur auf der Nockenwellenoberfläche abgefahren werden kann. Durch die anstellbaren Walzrollen wird eine Einschnürung in die Hohlwelle eingewalzt, wobei die Walzen vorzugsweise derart gesteuert zugefahren werden, dass sie in der Hohlwelle eine Einschnürung erzeugen, ohne dabei die Wanddicke der Hohlwelle zu reduzieren. Infolge einer Drei-Walzenanordnung kann auch die Exzentrizität an der Einschnürung in der Hohlwelle verbessert werden, was besonders vorteilhaft in Hinblick auf eine Nutzung der Einschnürung als Ölübergabe oder -lagerstelle ist. Durch die Nutzung einer Drei-Walzenanordnung kann die Prozesszeit des Montageverfahrens reduziert werden, indem beispielsweise die Walzrollen unterschiedlich radial angestellt werden. Außerdem kann mit einer Drei-Walzenanordnung die Krafteinwirkung auf die Hohlwelle besser ausgeglichen werden.

Bei einem Montageverfahren für eine Nockenwelle, umfassend eine Hohlwelle und einen im Inneren der Hohlwelle angeordneten Verschlussdeckel, werden zum Verhindern des Verrutschens des Verschlussdeckels Haltemittel in die Nockenwelle montiert, indem durch Bohrungen in der Hohlwelle Haltemittel eingelassen werden, die in das Innere der Nockenwelle hineinragen. Indem Haltemittel durch Bohrungen ins Innere der Nockenwelle hineingeschoben und montiert oder eingebracht werden, wird der Verschlussdeckel durch die Haltemittel am Verrutschen gehindert und gleichzeitig die Oberfläche der Nockenwellenaußenwand in ihrer Form nicht verändert. Bei den durch Bohrungen eingebrachten Haltemittel kann es sich um Materialaufwerfungen, wie beispielsweise Schweißraupen, handeln, bei denen Schmelze in den Hohlraum der Nockenwelle eingebracht wird. Das Einbringen von Schmelze durch eine Bohrung hätte jedoch den Nachteil, dass die Torsionssteifigkeit der Nockenwelle durch die Bohrung reduziert wird. Ein Einbringen von Schmelze durch das Ende der Hohlwelle würde dagegen keine Reduzierung der Torsionssteifigkeit zur Folge haben. Die eingebrachte Schmelze kann verschiedene Formen annehmen. Dabei kann es sich um einen einzelnen Schweißpunkt oder auch um eine Schweißraupe handeln, die beispielsweise eine die Innenseite der Hohlwelle radial vollständig umlaufende Erstreckung aufweist.

Bei einem Montageverfahren für eine Nockenwelle, umfassend eine Hohlwelle und einem im Inneren der Hohlwelle angeordneten Verschlussdeckel, werden Haltemittel von innen in die Hohlwelle montiert, um ein Verrutschen des Verschlussdeckels in mindestens eine axiale Richtung zu verhindern, wobei die Haltemittel mittels eines Verbundmittels in der Hohlwelle befestigt sind. Indem Haltemittel mittels Verbundmittel im Inneren der Nockenwelle befestigt werden, wird der Verschlussdeckel durch die Haltemittel am Verrutschen gehindert und gleichzeitig die Oberfläche der Nockenwellenaußenwand in ihrer Form nicht verändert.

In einer Ausführung des Montageverfahrens werden die Haltemittel im Inneren der Nockenwelle mittels Verklebung, Verschraubung oder Verschweißen befestigt.

Der Vorteil der Erfindung ist, dass es möglich ist, die eine oder die mehreren Einbuchtungen, die ein Verrutschen des Verschlussdeckels in der Nockenwelle verhindern, erst im Montageprozess in das Nockenwellenrohr einzufügen. Auf diese Weise können in die Nockenwelle flexibel Versorgungsbohrungen, Verschlussdeckel und zugehörige Einbuchtungen, die das Verrutschen des einen oder mehreren Verschlussdeckel an ungewünschte Positionen verhindern, eingebaut werden.

Die Erfindung wird nachfolgend anhand von Vorrichtungsskizzen näher erläutert, wobei es sich nur um beispielhafte Ausführungen handelt. Die Skizzen zeigen:
Fig. 1: Schema einer Nockenwelle mit rotationssymmetrischer Einwalzung an selber axialer Position wie die Versorgungsöffnung
Fig. 2: Schema einer Nockenwelle mit rotationssymmetrischer Einwalzung, die sich in axialer Richtung zwischen dem Ende des Verschlussdeckels und der Versorgungsöffnung befindet
Fig. 3: Querschnitte einer Nockenwelle an axialer Position der lediglich einen Einbuchtung, wobei es sich in Fig. 3a) um eine Einwalzung, in Fig. 3b) um eine Einkerbung und in Fig. 3c) um eine Eindrückung handelt.
Fig. 4: Querschnitte einer Nockenwelle an axialer Position der spiegelsymmetrischen Einbuchtung, welche aus zwei Einbuchtungen besteht, wobei es sich in Fig. 4a) um Einwalzungen, in Fig. 4b) um Einkerbungen und in Fig. 4c) um Eindrückungen handelt.
Fig. 5: Querschnitte einer Nockenwelle an axialer Position der asymmetrischen Einbuchtung, welche aus drei Einbuchtungen besteht, wobei es sich in Fig. 5a) um Einwalzungen, in Fig. 5b) um Einkerbungen und in Fig. 5c) um Eindrückungen handelt.
Fig. 6: Querschnitte einer Nockenwelle an axialer Position, an der ein Haltemittel von innen in der Nockenwelle montiert ist. Bei den präsentierten Formen der Haltemittel handelt es lediglich um Beispiele.
Fig. 7: Querschnitte einer Nockenwelle an axialer Position, an der zwei Haltemittel von innen in der Nockenwelle spiegelsymmetrisch montiert sind. Bei den präsentierten Formen der Haltemittel handelt es lediglich um Beispiele.
Fig. 8: Querschnitte einer Nockenwelle an axialer Position, an der drei Haltemittel von innen in der Nockenwelle asymmetrisch montiert sind. Bei den präsentierten Formen der Haltemittel handelt es lediglich um Beispiele.
Fig. 9: Querschnitt einer Nockenwelle an axialer Position, an der ein Haltemittel von außen durch eine Bohrung in der Nockenwellenwand eingebracht ist, das ins Innere der Nockenwelle ragt, wobei das Haltemittel aus einem soliden Zylinder besteht. Bei der präsentierten Form des Haltemittels handelt es lediglich um ein Beispiel.
Fig. 10: Querschnitt einer Nockenwelle an axialer Position, an der ein Haltemittel von außen durch eine Bohrung in der Nockenwellenwand eingebracht ist, das ins Innere der Nockenwelle ragt, wobei das Haltemittel aus einem Hohlzylinder besteht. Bei der präsentierten Form des Haltemittels handelt es lediglich um ein Beispiel.
Fig. 11: Schema einer Nockenwelle mit einer Materialaufwerfung an einer axialen Position mittig zwischen dem Verschlussdeckel und der Versorgungsöffnung.
Fig. 12: Schema einer Nockenwelle mit einer Materialaufwerfung an einer axialen Position knapp neben dem Verschlussdeckel, zwischen dem Verschlussdeckel und der Versorgungsöffnung.

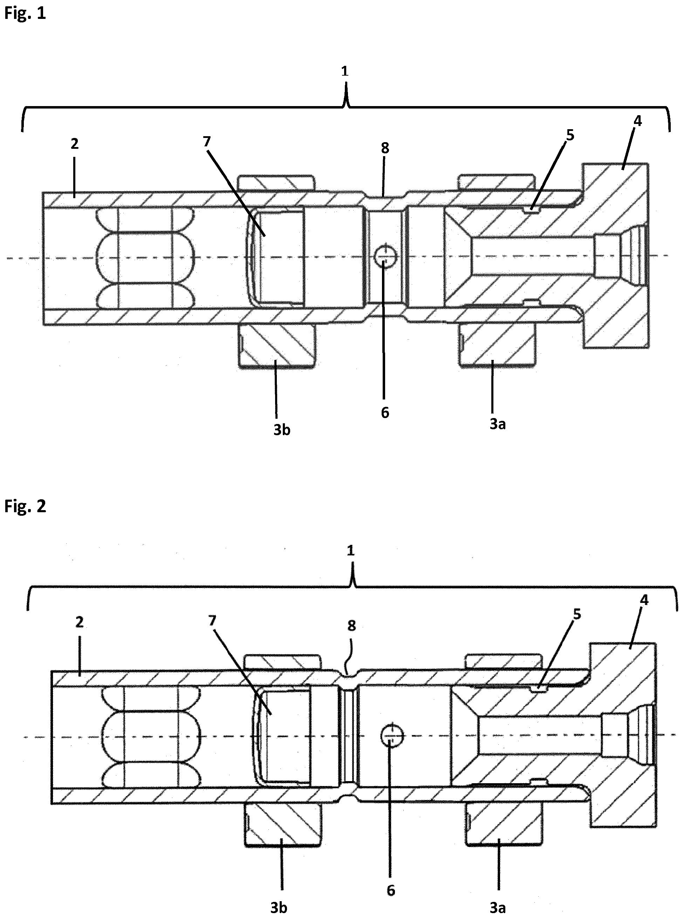

Fig. 1 zeigt eine Nockenwelle 1 bestehend aus einer Hohlwelle 2, die mit Nocken 3a und 3b besetzt ist und mit einem Endstück 4, welches mit einer Ringdichtung 5 versehen ist, verschlossen ist. Die Nockenwelle 1 ist mit einer Versorgungesöffnung 6 versehen, durch die anliegende Lager und Vorrichtungen mit Öl versorgt werden. Um ein Eindringen von Öl in ungewünschte Bereiche zu verhindern, befindet sich in der Nockenwelle ein Verschlussdeckel 7. Der Verschlussdeckel 7 wurde im dargestellten Beispiel unter einen Nocken 3b gepresst und somit in der Hohlwelle 2 eingeschnürt. Zum Nocken 3a ist der Verschlussdeckel 7 axial beabstandet. Damit der Verschlussdeckel 7 im Betrieb nicht verrutscht und so die Versorgungöffnung 6 zusetzt, befindet sich in der Hohlwelle 2 eine Einbuchtung 8 in Form einer Einwalzung, die den Verschlussdeckel 7 am Verrutschen hindert. In diesem Beispiel ist die Einbuchtung 8 in Form einer Einwalzung rotationssymmetrisch und befindet sich an selber axialer Position wie die Versorgungsbohrung 6. somit den Querschnitt der Hohlwelle an der entsprechenden Stelle lokal verengen. Die axiale Ausdehnung der Einbuchtung 8 ist kleiner als der axiale Abstand zwischen einem dem Nocken 3a zugewandten Ende des Verschlussdeckels 7 und dem Nocken 3a.

Fig. 2 zeigt eine Nockenwelle 1, die ähnlich aufgebaut ist, wie die, die in Fig. 1 dargestellt ist. Die Vorrichtungsskizzen aus Fig. 1 und Fig. 2 unterscheiden sich in sofern, dass sich die Einbuchtung 8, die in diesem Beispiel einer rotationssymmetrischen Einwalzung entspricht, zwischen dem Ende des Verschlussdeckels und der Versorgungsöffnung 6 befindet.

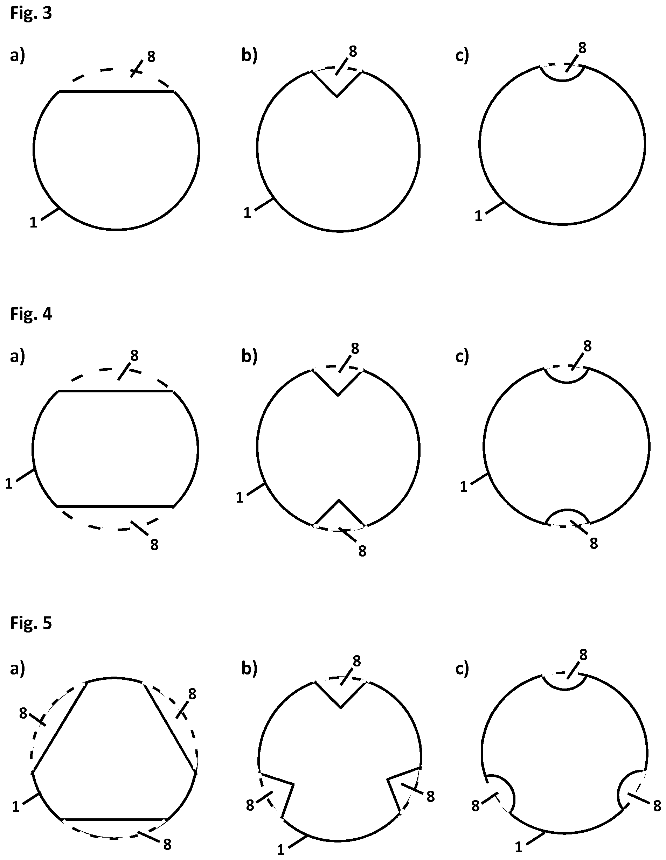

Fig. 3 zeigt drei Beispiele von Querschnitten von Nockenwellen 1, umfassend eine Hohlwelle 2, an der axialen Position an der sich eine Einbuchtung 8 befindet. Bei der Einbuchtung kann es sich um eine plastische Einformung, die mittels eines Stempels erzeugt wird, eine Einkerbung oder eine Eindrückung handeln. Fig. 3a) zeigt eine Einbuchtung in Form einer einzigen eingestempelten Einformung, Fig. 3b) zeigt eine Einbuchtung in Form einer einzigen Einkerbung und Fig. 3c) zeigt eine Einbuchtung in Form einer einzigen Eindrückung.

Fig. 4 zeigt drei Beispiele von Querschnitten von Nockenwellen 1, umfassend eine Hohlwelle 2, an der axialen Position an der sich eine spiegelsymmetrische Einbuchtung 8 befindet. Bei der Einbuchtung kann es sich um eine plastische Einformung, die mittels eines Stempels erzeugt wird, Einkerbung oder Eindrückung handeln. Fig. 4a) zeigt eine Einbuchtung in Form zweier sich gegenüberliegender eingestempelten Einformungen, Fig. 4b) zeigt eine Einbuchtung in Form zweier sich gegenüberliegender Einkerbungen und Fig. 4c) zeigt eine Einbuchtung in Form zweier sich gegenüberliegender Eindrückungen.

Fig. 5 zeigt drei Beispiele von Querschnitten von Nockenwellen 1, umfassend eine Hohlwelle 2, an der axialen Position an der sich eine asymmetrische Einbuchtung 8 befindet. Bei der Einbuchtung kann es sich um eine plastische Einformung, die mittels eines Stempels erzeugt wird, Einkerbung oder Eindrückung handeln. Fig. 5a) zeigt eine Einbuchtung in Form dreier eingestempelter Einformungen, Fig. 5b) zeigt eine Einbuchtung in Form dreier Einkerbungen und Fig. 5c) zeigt eine Einbuchtung in Form dreier Eindrückungen.

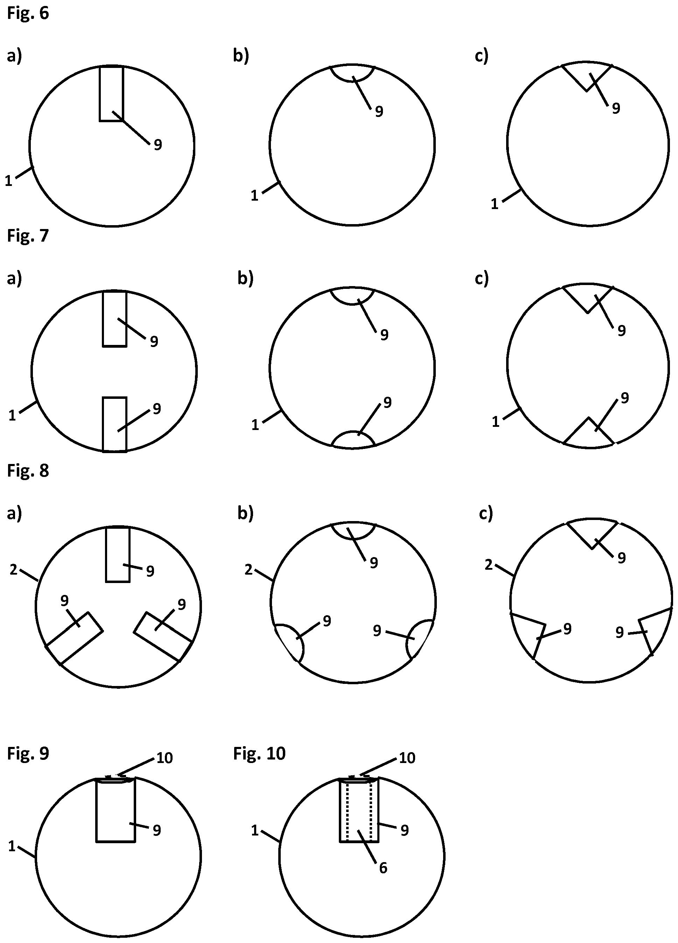

Fig. 6 zeigt drei Beispiele von Querschnitten von Nockenwellen, umfassend eine Hohlwelle 2, an der axialen Position an der sich eine Einbuchtung 8 in Form eines einzigen von innen in die Hohlwelle 2 montierten Haltemittels 9 befindet. Fig. 6a) bis Fig. 6c) zeigen beispielhafte Formen für ein im Inneren der Hohlwelle montiertes Haltemittel.

Fig. 7 zeigt drei Beispiele von Querschnitten von Nockenwellen, umfassend eine Hohlwelle 2, an der axialen Position an der sich eine spiegelsymmetrische Einbuchtung 8 in Form zweier sich gegenüberliegender Haltemittel 9, die von innen in die Hohlwelle 2 montiert sind, befindet. Fig. 7a) bis Fig. 7c) zeigen beispielhafte Formen für ein im Inneren der Hohlwelle montiertes Haltemittel.

Fig. 8 zeigt drei Beispiele von Querschnitten von Nockenwellen 1, umfassend eine Hohlwelle 2, an der axialen Position an der sich eine asymmetrische Einbuchtung 8 in Form dreier von innen in die Hohlwelle 2 montierte Haltemittel 9 befindet. Fig. 8a) bis Fig. 8c) zeigen beispielhafte Formen für ein im Inneren der Hohlwelle montiertes Haltemittel.

Fig. 9 zeigt den Querschnitt einer Nockenwelle 1 an axialer Position, an der ein Haltemittel 9 von außen durch eine Bohrung 10 in der Nockenwellenwand eingebracht ist, das ins Innere der Nockenwelle 1 ragt. Im gezeigten Beispiel handelt es sich bei dem Haltemittel 9 um einen soliden Zylinder. Bei der präsentierten Form des Haltemittels handelt es lediglich um ein Beispiel.

Fig. 10 zeigt den Querschnitt einer Nockenwelle 1 an axialer Position, an der ein Haltemittel 9 von außen durch eine Bohrung 10 in der Nockenwellenwand eingebracht ist, das ins Innere der Nockenwelle 1 ragt. Im gezeigten Beispiel handelt es sich bei dem Haltemittel 9 um einen ausgehölten Zylinder, der als Versorgungsöffnung 6 dient. Bei der präsentierten Form des Haltemittels handelt es lediglich um ein Beispiel.

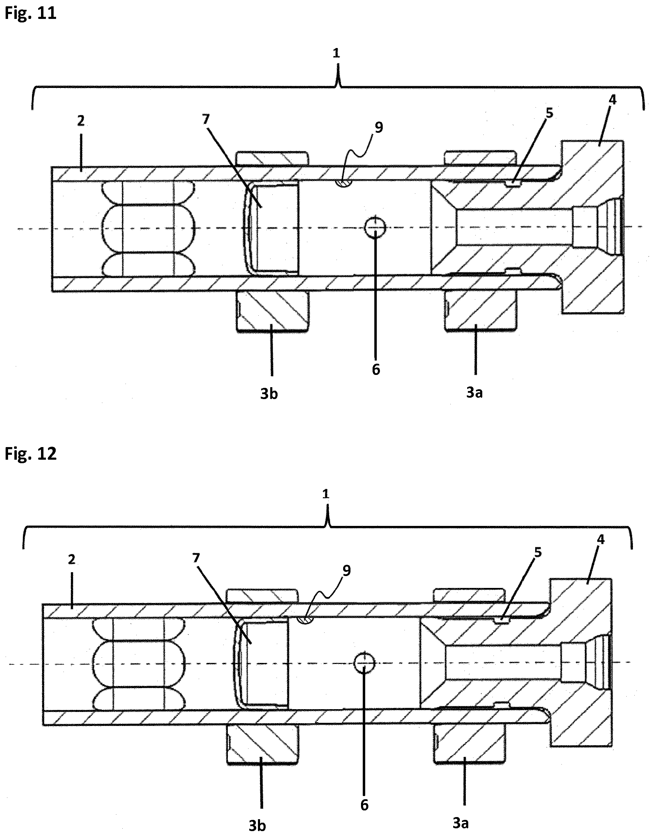

Fig. 11 zeigt eine Nockenwelle 1 bestehend aus einer Hohlwelle 2, die mit Nocken 3a und 3b besetzt ist und mit einem Endstück 4, welches mit einer Ringdichtung 5 versehen ist, verschlossen ist. Die Nockenwelle 1 ist mit einer Versorgungesöffnung 6 versehen, durch die anliegende Lager und Vorrichtungen mit Öl versorgt werden. Um ein Eindringen von Öl in ungewünschte Bereiche zu verhindern, befindet sich in der Nockenwelle ein Verschlussdeckel 7. Der Verschlussdeckel 7 wurde im dargestellten Beispiel unter einen Nocken 3b gepresst und somit in der Hohlwelle 2 eingeschnürt. Zum Nocken 3a ist der Verschlussdeckel 7 axial beabstandet. Damit der Verschlussdeckel 7 im Betrieb nicht verrutscht und so die Versorgungöffnung 6 zusetzt, befindet sich in der Hohlwelle 2 eine Einbuchtung 8 in Form eines Haltemittels 9, das durch eine Materialaufwerfung, wie beispielsweise eine Schweißraupe, gebildet wird. In diesem Beispiel ist die Materialaufwerfung vom Ende der Hohlwelle aus eingebracht worden und befindet sich in Axialrichtung mittig zwischen dem Verschlussdeckel 7 und der vom Verschlussdeckel nächstgelegenen Versorgungsöffnung 6. Die axiale Ausdehnung der Einbuchtung 9 ist kleiner als der axiale Abstand zwischen einem dem Nocken 3a zugewandten Ende des Verschlussdeckels 7 und dem Nocken 3a.

Fig. 12 zeigt eine Nockenwelle 1 bestehend aus einer Hohlwelle 2, die mit Nocken 3a und 3b besetzt ist und mit einem Endstück 4, welches mit einer Ringdichtung 5 versehen ist, verschlossen ist. Die Nockenwelle 1 ist mit einer Versorgungesöffnung 6 versehen, durch die anliegende Lager und Vorrichtungen mit Öl versorgt werden. Um ein Eindringen von Öl in ungewünschte Bereiche zu verhindern, befindet sich in der Nockenwelle ein Verschlussdeckel 7. Der Verschlussdeckel 7 wurde im dargestellten Beispiel unter einen Nocken 3b gepresst und somit in der Hohlwelle 2 eingeschnürt. Zum Nocken 3a ist der Verschlussdeckel 7 axial beabstandet. Damit der Verschlussdeckel 7 im Betrieb nicht verrutscht und so die Versorgungöffnung 6 zusetzt, befindet sich in der Hohlwelle 2 eine Einbuchtung 8 in Form eines Haltemittels 9, das durch eine Materialaufwerfung, wie beispielsweise eine Schweißraupe, gebildet wird. In diesem Beispiel ist die Materialaufwerfung vom Ende der Hohlwelle aus eingebracht worden und befindet sich in Axialrichtung zwischen dem Verschlussdeckel 7 und der vom Verschlussdeckel nächstgelegenen Versorgungsöffnung 6 knapp neben dem Verschlussdeckel 7. Die axiale Ausdehnung der Einbuchtung 9 ist kleiner als der axiale Abstand zwischen einem dem Nocken 3a zugewandten Ende des Verschlussdeckels 7 und dem Nocken 3a.

### Bezugszeichen

- 1: Nockenwelle
- 2: Hohlwelle
- 3a, 3b: Nocken
- 4: Endstück
- 5: Ringdichtung
- 6: Versorgungsöffnung
- 7: Verschlussdeckel
- 8: Einbuchtung
- 9: Haltemittel
- 10: Bohrung

## Patentansprüche

1. Nockenwelle (1), umfassend eine Hohlwelle (2), mindestens einen Nocken (3a) und einen im Inneren der Hohlwelle (2) und in axialer Richtung beabstandet zu dem Nocken (3a) angeordneten Verschlussdeckel (7), wobei die Nockenwelle (1) ein oder mehrere Haltemittel (9) umfasst, um ein Verrutschen des Verschlussdeckels (7) in mindestens eine axiale Richtung zu verhindern, **dadurch gekennzeichnet, dass**
die axiale Ausdehnung der einen oder mehreren Haltemittel (9) kleiner oder gleich dem axialen Abstand zwischen einem dem Nocken (3a) zugewandten Ende des Verschlussdeckels (7) und dem Nocken (3a) ist.

2. Nockenwelle nach Anspruch 1, **dadurch gekennzeichnet, dass** es sich bei dem einen oder den mehreren Haltemitteln (9) um im Inneren der Hohlwelle (2) fest montierte Haltemittel (9) handelt.

3. Nockenwelle nach einem der Ansprüche 1 oder 2, **dadurch gekennzeichnet, dass** es sich bei dem einen oder den mehreren Haltemitteln (9) um von außen durch die Außenwand der Hohlwelle (2) eingebrachte Haltemittel (9) handelt, die in den Innenraum der Hohlwelle (2) hineinragen.

4. Nockenwelle Anspruch 1, **dadurch gekennzeichnet, dass** es sich bei dem einen oder den mehreren Haltemitteln (9) um Haltemittel (9) in Form von einer eingebrachten Materialaufwerfung handelt.

5. Nockenwelle nach Anspruch 1, **dadurch gekennzeichnet, dass** das Haltemittel eine Einbuchtung umfasst, wobei die eine oder die mehreren Einbuchtungen (8) zwischen dem Ende des Verschlussdeckels (7) und dem Nocken (3a) angeordnet ist.

6. Nockenwelle nach Anspruch 5, **dadurch gekennzeichnet, dass** die Nockenwelle (1) eine oder mehrere Versorgungsöffnungen (6) aufweist.

7. Nockenwelle nach Anspruch 6, **dadurch gekennzeichnet, dass** die eine oder die mehreren Einbuchtungen (8) in axialer Richtung der Nockenwelle (1) zwischen dem Verschlussdeckel (7) und der dem Verschlussdeckel (7) am nächsten liegenden Versorgungsöffnung (6) angeordnet sind.

8. Nockenwelle nach Anspruch 6, **dadurch gekennzeichnet, dass** die eine oder mehreren Einbuchtungen (8) in axialer Richtung der Nockenwelle (1) an selber axialer Positionierung wie die dem Verschlussdeckel (7) am nächsten liegenden Versorgungsöffnung (6) angebracht ist.

9. Nockenwelle nach Anspruch 6, **dadurch gekennzeichnet, dass** sich die eine oder die mehreren Einbuchtungen (8) in axialer Richtung der Nockenwelle (1) vom Ende des Verschlussdeckels (7) bis über die dem Verschlussdeckel (7) am nächsten liegenden Versorgungsöffnung (6) erstrecken.

10. Nockenwelle nach Anspruch 6, **dadurch gekennzeichnet, dass** sich die eine oder die mehreren Einbuchtungen (8) in axialer Richtung der Nockenwelle (1) vom Ende des Verschlussdeckels (7) bis zur axialen Position der nächstgelegenen Nocken (3a) über den dazwischen liegenden Innenraum der Nockenwelle (1), in dem sich die eine oder mehreren Versorgungsöffnungen (6) befinden, erstrecken.

11. Nockenwelle nach Anspruch 6, **dadurch gekennzeichnet, dass** sich in axialer Richtung der Nockenwelle auf beiden Seiten des Verschlussdeckels jeweils eine oder mehrere Einbuchtungen befinden.

12. Nockenwelle nach einem der Ansprüche 8 bis 11, **dadurch gekennzeichnet, dass** es sich bei der einen oder den mehreren Einbuchtungen (8) um von außen in die Nockenwelle (1) eingeprägte Einwalzungen handelt.

13. Nockenwelle nach einem der Ansprüche 8 bis 11, **dadurch gekennzeichnet, dass** es sich bei der einen oder den mehreren Einbuchtungen (8) um von außen in die Nockenwelle (1) eingeprägte Eindrückungen handelt.

14. Nockenwelle nach einem der Ansprüche 8 bis 11, **dadurch gekennzeichnet, dass** es sich bei der einen oder den mehreren Einbuchtungen (8) um von außen in die Nockenwelle (1) eingeprägte Einkerbungen handelt.

15. Nockenwelle nach einem der Ansprüche 8 bis 11, **dadurch gekennzeichnet, dass** es sich bei der einen oder den mehreren Einbuchtungen (8) um von außen in die Nockenwelle (1) eingestempelte plastische Einformungen handelt.

16. Montageverfahren für eine Nockenwelle (1) gemäß einem der vorangegangenen Ansprüche 5 bis 15, **dadurch gekennzeichnet, dass** die eine oder mehrere Einbuchtungen (8) in die Nockenwelle (1) eingebracht werden, nachdem der Verschlussdeckel (7) in die Nockenwelle (1) eingeführt wurde.

17. Montageverfahren nach Anspruch 16, **dadurch gekennzeichnet, dass** die eine oder die mehreren Einbuchtungen (8) nach dem Einbringen in die Nockenwelle (1) eine definierte minimale Ausdehnung in radialer und axialer Richtung haben und in beide Richtungen nachträglich erweitert werden.

18. Montageverfahren nach einem der Ansprüche 16 oder 17, **dadurch gekennzeichnet, dass** die eine oder mehrere Einbuchtungen (8) von außen in die Nockenwelle (1) eingewalzt werden, um ein Verrutschen des Verschlussdeckels (7) in mindestens eine axiale Richtung zu verhindern.

19. Montageverfahren für eine Nockenwelle (1) nach mindestens einem der vorhergehenden Ansprüche 1 oder 4, umfassend eine Hohlwelle (2) und einem im Inneren der Hohlwelle (2) angeordneten Verschlussdeckel (7), **dadurch gekennzeichnet, dass** eine Schmelze zur Ausbildung eines Haltemittels zum Verhindern eines Verrutschens des Verschlussdeckels (7) durch das Ende der Hohlwelle (2) eingebracht wird.

## Claims

1. A camshaft (1), comprising a hollow shaft (2), at least one cam (3a) and a closing cover (7) which is arranged in the interior of hollow shaft (2) and at a distance from the cam (3a) in the axial direction, wherein the camshaft (1) comprises one or more holding means (9) in order to prevent slipping of the closing cover (7) in at least one axial direction, **characterized in that** the axial extent of the one or more holding means (9) is smaller than or equal to the axial distance between an end of the closing cover (7) that faces the cam (3a) and the cam (3a).

2. The camshaft as claimed in claim 1, **characterized in that** the one or the more holding means (9) mounted fixedly in the interior of the hollow shaft (2).

3. The camshaft as claimed in claim 1 or 2, **characterized in that** the one or the more holding means (9) are introduced through the outer wall of the hollow shaft (2) from the outside and project into the interior space of the hollow shaft (2).

4. The camshaft as claimed in claim 1, **characterized in that** the holding means (9) are in the form of an introduced material elevation.

5. The camshaft as claimed in claim 1, **characterized in that** the holding means (9) comprises an indentation, said one or more indentations (8) being located between the end of the closing cover (7) and the cam (3a).

6. The camshaft as claimed in claim 5, **characterized in that** the camshaft (1) comprises one or more supply openings (6).

7. The camshaft as claimed in claim 6, **characterized in that** the one or the more indentations (8) are arranged in the axial direction of the camshaft (1) between the closing cover (7) and the supply opening (6) which is located closest to the closing cover (7).

8. The camshaft as claimed in claim 6, **characterized in that** the one or more indentations (8) is mounted in the axial direction of the camshaft (1) at the same axial positioning as the supply opening (6) which is located closest to the closing cover (7).

9. The camshaft as claimed in claim 6, **characterized in that** the one or more indentations (8) extend in the axial direction of the camshaft (1) from the end of the closing cover (7) until over the supply opening (6) which is located closest to the closing cover (7).

10. The camshaft as claimed in claim 6, **characterized in that** the one or the more indentations (8) extend in the axial direction of the camshaft (1) from the end of the closing cover (7) as far as the axial position of the closest cams (3a) over the interior space of the camshaft (1), which interior space is located in between and in which the one or more supply openings (6) are situated.

11. The camshaft as claimed in claim 6, **characterized in that** one or more indentations are in each case situated in the axial direction of the camshaft on both sides of the closing cover.

12. The camshaft as claimed in one of claim 8 to 11, **characterized in that** the one or the more indentations (8) are inwardly rolled portions which are impressed into the camshaft (1) from the outside.

13. The camshaft as claimed in one of claims 8 to 11, **characterized in that** the one or the more indentations (8) are impressions which are impressed into the camshaft (1) from the outside.

14. The camshaft as claimed in one of claims 8 to 11, **characterized in that** the one or the more indentations (8) are notches which are impressed into the camshaft (1) from the outside.

15. The camshaft as claimed in one of claims 8 to 11, **characterized in that** the one or the more indentations (8) are plastic inwardly molded portions which are punched into the camshaft (1) from the outside.

16. A mounting method for a camshaft (1), according to any one of the preceding claims 5 to 15, **characterized in that** one or more indentations (8) are introduced into the camshaft (1) after the closing cover (7) has been inserted into the camshaft (1).

17. The method as claimed in claim 16, **characterized in that** the one or the more indentations (8) after introduction into the camshaft (1) have a defined minimum extent in the radial and axial direction and are expanded retrospectively in both directions.

18. The method as claimed in either of claims 16 or 17, **characterized in that** the one or more indentations (8) are rolled into the camshaft (1) from the outside to prevent slippage of the closing cover (7) in at least one axial direction.

19. A mounting method for a camshaft (1) according to any one of the preceding claims 1 to 4, comprising a hollow shaft (2) and a closing cover (7) arranged in the interior of the hollow shaft (2), **characterized in that** a melt for forming a means for preventing slippage of the closure cover (7) through the end of the hollow shaft (2) is introduced through the end of the hollow shaft (2).

## Revendications

1. Arbre à cames (1), comprenant un arbre creux (2), au moins une came (3a) et un couvercle de fermeture (7) qui est disposé à l'intérieur de l'arbre creux (2) et espacé axialement de la came (3a), l'arbre à cames (1) comportant un ou plusieurs moyens de retenue (9) destinés à empêcher le couvercle de fermeture (7) de glisser dans au moins une direction axiale,
**caractérisé en ce que**
l'étendue axiale du ou des moyens de retenue (9) est inférieure ou égale à la distance axiale entre une extrémité, dirigée vers la came (3a), du couvercle de fermeture (7) et la came (3a).

2. Arbre à cames selon la revendication 1, **caractérisé en ce que** le ou les moyens de retenue (9) sont des moyens de retenue (9) montés fixes à l'intérieur de l'arbre creux (2).

3. Arbre à cames selon l'une des revendications 1 ou 2, **caractérisé en ce que** le ou les moyens de retenue (9) sont des moyens de retenue (9) qui sont introduits de la paroi extérieure de l'arbre creux (2) et qui font saillie dans l'espace intérieur de l'arbre creux (2).

4. Arbre à cames selon la revendication 1, **caractérisé en ce que** le ou les moyens de retenue (9) sont des moyens de retenue (9) se présentant sous la forme d'un renflement de matière introduit.

5. Arbre à cames selon la revendication 1, **caractérisé en ce que** le moyen de retenue comprend un creux, le ou les creux (8) étant disposés entre l'extrémité du couvercle de fermeture (7) et la came (3a).

6. Arbre à cames selon la revendication 5, **caractérisé en ce que** l'arbre à cames (1) comporte une ou plusieurs ouvertures d'alimentation (6).

7. Arbre à cames selon la revendication 6, **caractérisé en ce que** le ou les creux (8) sont disposés dans la direction axiale de l'arbre à cames (1) entre le couvercle de fermeture (7) et l'ouverture d'alimentation (6) la plus proche du couvercle de fermeture (7).

8. Arbre à cames selon la revendication 6, **caractérisé en ce que** le ou les creux (8) sont ménagés dans la direction axiale de l'arbre à cames (1) au même positionnement axial que l'ouverture d'alimentation (6) la plus proche du couvercle de fermeture (7).

9. Arbre à cames selon la revendication 6, **caractérisé en ce que** le ou les creux (8) s'étendent dans la direction axiale de l'arbre à cames (1) depuis l'extrémité du couvercle de fermeture (7) jusqu'au-delà de l'ouverture d'alimentation (6) la plus proche du couvercle de fermeture (7).

10. Arbre à cames selon la revendication 6, **caractérisé en ce que** le ou les creux (8) s'étendent dans la direction axiale de l'arbre à cames (1) depuis l'extrémité du couvercle de fermeture (7) jusqu'à la position axiale des cames (3a) les plus proches au-dessus de l'espace intérieur intermédiaire de l'arbre à cames (1) dans lequel la ou les ouvertures d'alimentation (6) sont situées.

11. Arbre à cames selon la revendication 6, **caractérisé en ce qu'**un ou plusieurs creux sont situés des deux côtés du couvercle de fermeture dans la direction axiale de l'arbre à cames.

12. Arbre à cames selon l'une des revendications 8 à 11, **caractérisé en ce que** le ou les creux (8) sont des renfoncements par laminage estampés dans l'arbre à cames (1) depuis l'extérieur.

13. Arbre à cames selon l'une des revendications 8 à 11, **caractérisé en ce que** le ou les creux (8) sont des renfoncements par pressage matricés dans l'arbre à cames (1) depuis l'extérieur.

14. Arbre à cames selon l'une des revendications 8 à 11, **caractérisé en ce que** le ou les creux (8) sont des renfoncements par rainurage matricés dans l'arbre à cames (1) depuis l'extérieur.

15. Arbre à cames selon l'une des revendications 8 à 11, **caractérisé en ce que** le ou les creux (8) sont des renfoncements par moulage plastique emboutis dans l'arbre à cames (1) depuis l'extérieur.

16. Procédé d'assemblage d'un arbre à cames (1) selon l'une des revendications précédentes 5 à 15, **caractérisé en ce que** le ou les creux (8) sont ménagés dans l'arbre à cames (1) après insertion du couvercle de fermeture (7) dans l'arbre à cames (1).

17. Procédé de montage selon la revendication 16, **caractérisé en ce que** le ou les creux (8) ont une étendue minimale définie dans les directions radiale et axiale après avoir été ménagés dans l'arbre à cames (1) et sont ensuite élargis dans les deux directions.

18. Procédé de montage selon l'une des revendications 16 et 17, **caractérisé en ce que** le ou les creux (8) sont ménagés par laminage dans l'arbre à cames (1) depuis l'extérieur afin d'empêcher le couvercle de fermeture (7) de glisser dans au moins une direction axiale.

19. Procédé de montage d'un arbre à cames (1) selon l'une au moins des revendications 1 et 4 précédentes, ledit procédé comprenant un arbre creux (2) et un couvercle de fermeture (7) disposé à l'intérieur de l'arbre creux (2), **caractérisé en ce qu'**une matière en fusion est introduite par l'extrémité de l'arbre creux (2) afin de former un moyen de retenue destiné à empêcher le couvercle de fermeture (7) de glisser.
